# EUROPÄISCHE PATENTANMELDUNG

(11) **EP 1 591 344 A2**
(43) Veröffentlichungstag der Anmeldung: **02.11.2005**
(21) Anmeldenummer: 05002392.8
(22) Anmeldetag: 04.02.2005
(51) Int. Cl.: B62D 5/00, B62D 5/04

(54) **Überlagerungs-Lenkvorrichtung für Kraftfahrzeuge**

(30) Priorität: 30.04.2004 DE 102004021475
(71) Anmelder: AUDI AG, 85045 Ingolstadt (DE)
(72) Erfinder: Hilbig, Alexander, 85084 Langenbruck (DE)
(74) Vertreter: Asch, Konrad

(57) **Zusammenfassung**

Lenkvorrichtung für Kraftfahrzeuge, mit einem Zahnstangen-Lenkgetriebe, dessen Zahnstange (15) mit einem Antriebsritzel in Eingriff ist, wobei das Antriebsritzel unter Zwischenschaltung eines Überlagerungsgetriebes (14) mit der Lenksäule (10) des Kraftfahrzeuges gekoppelt ist und wobei das Überlagerungsgetriebe (14) durch ein Stellgetriebe (16) gebildet ist, dessen eines Getriebeelement mittels eines Elektromotors (38) zur Überlagerung einer Lenkbewegung verstellbar ist. Eine besonders kompakte und bauraumgünstige Konstruktion besteht darin, dass
das Getriebeelement der Planetenradträger (18) eines Stellgetriebes (16) ist;
der Planetenradträger (18) durch zwei ringförmige und über Stege miteinander verbundene Scheiben (18a,18b) gebildet ist, zwischen denen jeweils Sätze von zwei miteinander verbundenen Planetenräder (28,30) frei drehbar gelagert sind;
die Sätze von Planetenrädern (28,30) mit zwei innen verzahnten, ringförmigen Außenrädern (34,36) kämmen;
das eine Außenrad (36) mit einer Außenverzahnung (36a) das mit der Zahnstange (15) in Eingriff befindliche Antriebsritzel bildet;
das zweite Außenrad (34) mit einer Außenverzahnung (34a) mit einem weiteren Zahnritzel (12) auf der Lenksäule (10) in Eingriff ist; und
der Elektromotor (38) im wesentlichen konzentrisch innerhalb des Planetenradträgers (18) und jeweils der Sätze von zwei Planetenrädern (28,30) angeordnet ist.

## Beschreibung

Die Erfindung betrifft eine Lenkvorrichtung für Kraftfahrzeuge gemäß dem Oberbegriff des Patentanspruches 1.

Lenkvorrichtungen mit Überlagerungsgetriebe haben u. a. den Vorteil, dass nahezu beliebige variable Lenkübersetzungen von sehr direkt (z. B. beim Einparken des Kraftfahrzeuges) bis sehr indirekt (z. B. bei hohen Geschwindigkeiten) steuerbar sind, indem über den Elektromotor bei Bedarf entsprechende Lenkbewegungen zur willkürlich über das Lenkhandrad und die Lenksäule eingesteuerten Lenkbewegung überlagert werden. Ohne Oberlagerungssteuerung liegt die konstruktiv vorgegebene Lenkübersetzung vor, die in der Regel einen Kompromiss zwischen Fahrkomfort und Lenkdynamik bildet. Ein Problem solcher Lenkvorrichtungen liegt in der Anordnung des Überlagerungsgetriebes im Bereich der Lenksäule und/oder des Zahnstangen-Lenkgetriebes im Kraftfahrzeug, aufgrund des dort zumeist beengten Einbauraumes.

Aufgabe der Erfindung ist es, eine Lenkvorrichtung der gattungsgemäßen Art vorzuschlagen, dessen Überlagerungsgetriebe besonders kompakt und einbaugünstig ausgebildet ist.

Diese Aufgabe wird erfindungsgemäß mit den kennzeichnenden Merkmalen des Patentanspruches 1 gelöst. Vorteilhafte Weiterbildungen der Erfindung sind den weiteren Patentansprüchen entnehmbar.

Erfindungsgemäß wird vorgeschlagen, dass
das Getriebeelement der Planetenradträger eines Stellgetriebes ist;
der Planetenradträger durch zwei ringförmige und über Stege miteinander verbundene Scheiben gebildet ist, zwischen denen jeweils zwei miteinander verbundene Planetenräder frei drehbar gelagert sind;
die Planetenräder mit zwei innen verzahnten, ringförmigen Außenrädern kämmen;
das eine Außenrad mit einer Außenverzahnung das mit der Zahnstange in Eingriff befindliche Antriebsritzel bildet;
das zweite Außenrad mit einer Außenverzahnung mit einem weiteren Zahnritzel auf der Lenksäule in Eingriff ist; und
der Elektromotor im wesentlichen konzentrisch innerhalb des Planetenradträgers und der jeweils zwei Planetenräder angeordnet ist.

Durch diese Merkmale gelingt es, den Elektromotor konzentrisch im Überlagerungsgetriebe anzuordnen bzw. zu integrieren und dieses unter Einbeziehung des mit der Zahnstange zusammenwirkenden Antriebsritzels quasi auf das Gehäuse der Zahnstangenlenkung aufzusatteln. Ferner kann das Zahnritzel der Lenksäule an weitgehend beliebiger Stelle am korrespondierenden Außenrad des Überlagerungsgetriebes in dessen Umfangsbereich angeordnet werden, wodurch die Lage der Lenksäule an konstruktive und bauliche Gegebenheiten im Fußraumbereich des Kraftfahrzeuges besser anpassbar ist.

Zur Erzielung weiterer Freiheitsgrade in der Übersetzungsauslegung und der Bewegungsüberlagerung können die Planetenräder zu den korrespondierenden Außenrädern unterschiedliche Übersetzungsverhältnisse aufweisen.

Die an- und abtreibenden Außenräder des Überlagerungsgetriebes können vorteilhaft über in komplementären Nuten angeordneten Führungsringen verdrehbar auf den Scheiben des Planetenradträgers geführt sein. Dies stellt eine in sich steife und spielfreie Lagerung der zusätzlich über die Planetenräder in Radialrichtung abgestützten Außenräder sicher.

Zusätzlich können auch die an- und abtreibenden Außenringe zwischen sich über einen in komplementären Nuten angeordneten Führungsring gegeneinander verdrehbar gelagert sein.

Des weiteren wird zur baulichen Vereinfachung des Überlagerungsgetriebes vorgeschlagen, die von dem Stellgetriebe abgewandte Scheibe des Planetenradträgers auf einem den Elektromotor tragenden Gehäuseflansch des Überlagerungsgetriebes drehbar zu lagern. Damit wird eine in sich kompakte Montageeinheit geschaffen, die dann an das Gehäuse der Zahnstangenlenkung angebaut werden kann.

Das Stellgetriebe kann ein Planetenradgetriebe oder ein sogenanntes Harmonic-drive.Getriebe sein. Bevorzugt wird jedoch vorgeschlagen, dass der Elektromotor über einen Excenter mehrere Kurvenscheiben eines Kurvenscheibengetriebes als Stellgetriebe antreibt, die trieblich mit Mitnehmerbolzen am Planetenradträger und Statorbolzen an einer gehäusefesten Statorscheibe zusammenwirken. Derartige, als Cyclo-Getriebe bekannte Stellgetriebe, weisen eine hohe, einstufige Untersetzung auf, die zudem besonders spielfrei und weitgehend selbsthemmend ausführbar ist.

Dabei kann ferner die dem Stellgetriebes unmittelbar benachbarte Scheibe des Planetenradträgers auf dem Gehäuse des Elektromotors drehbar gelagert sein, so dass das Gehäuse baulich günstig zugleich den inneren Gehäuseteil des Überlagerungsgetriebes darstellt.

Zur Eliminierung unerwünschter Zahnspiele in der Übertragung von der Lenksäule zur Zahnstange des Zahnstangen-Lenkgetriebes können die Außenverzahnung des antreibenden Außenrades und/oder des abtreibenden Außenrades eine begrenzt nachgiebige Kunststoffbeschichtung aufweisen.

Des weiteren kann zur Erzielung eines weiteren konstruktiven Freiheitsgrades in der Anordnung der Lenksäule die Verzahnung zumindest des antreibenden Außenrades und des Zahnritzels der Lenksäule durch eine Kegelverzahnung gebildet sein. Dadurch kann die Lenksäule auch in einem definierten Winkel relativ zur Drehachse des Überlagerungsgetriebes bzw. des korrespondierenden Außenrades verlaufen.

Schließlich kann das an- oder abtreibende Außenrad über ein Umkehr-Planetenrad mit den weiteren Planetenrädern trieblich verbunden sein. Damit wird in fertigungstechnisch einfacher Weise eine Drehrichtungsumkehr zwischen den beiden Außenrädern erzielt, die einen weiteren Freiheitsgrad bei der Anordnung des Zahnstangen-Lenkgetriebes z. B. für ein Kraftfahrzeug mit Rechtslenker-Auslegung ermöglicht.

Mehrere Ausführungsbeispiele der Erfindung sind im folgenden mit weiteren Einzelheiten näher erläutert. Die schematische Zeichnung zeigt in:
- **Fig. 1**: eine Lenkvorrichtung für Kraftfahrzeuge mit einem zwischen Lenksäule und Zahnstangen-Lenkgetriebe eingeschaltetem Überlagerungsgetriebe in raumbildlicher Darstellung;
- **Fig. 2**: einen Längsschnitt durch das Überlagerungsgetriebe gemäß Linie II - II der Fig. 3: und
- **Fig. 3**: einen Querschnitt entlang der Linie III - III der Fig. 2.

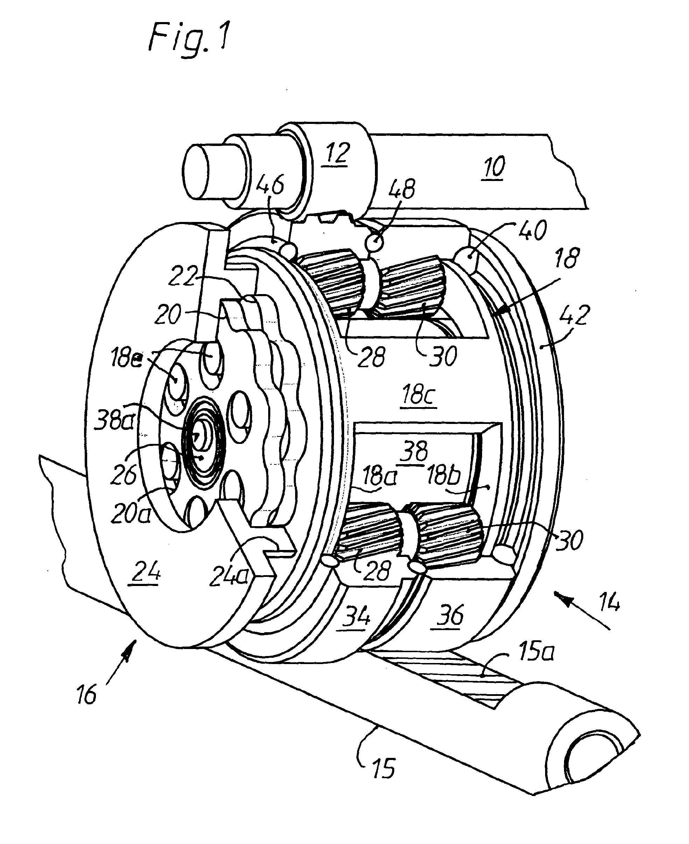

In den **Fig. 1 bis 3** ist eine Lenkvorrichtung soweit dargestellt, als dies für das Verständnis der vorliegenden Erfindung erforderlich ist. Dabei ist mit 10 eine im Endabschnitt dargestellte Lenksäule bezeichnet, die im Kraftfahrzeug in üblicher Weise drehbar gelagert ist und ein Lenkhandrad zur willkürlichen Betätigung der Lenkung des Kraftfahrzeuges aufweist.

Die Lenksäule 10 trägt ein Zahnritzel 12, das in noch zu beschreibender Weise ein Überlagerungsgetriebe 14 antreibt.

Das Überlagerungsgetriebe 14 wiederum ist an ein nicht dargestelltes Gehäuse eines Zahnstangen-Lenkgetriebes quasi aufgesattelt angebaut und trieblich mit der Zahnstange 15 des Lenkgetriebes verbunden. Auch das Lenkgetriebe ist soweit nicht dargestellt und beschrieben üblicher Bauart und bewirkt über nicht ersichtliche Spurstangen die Lenkung der Vorderräder des Kraftfahrzeuges.

Das Überlagerungsgetriebe 14 weist ein Stellgetriebe 16 auf, das als Kurvenscheibengetriebe ausgebildet ist und sich im wesentlichen aus einem Planetenradträger 18, zwei Kurvenscheiben 20, 22, einer Statorscheibe 24 und einem Excenter 26 zusammensetzt.

Der Planetenradträger 18 ist topfförmig mit zwei Scheiben 18a, 18b ausgeführt, die mittels mehrerer umfangsverteilter Stege 18c miteinander verbunden sind.

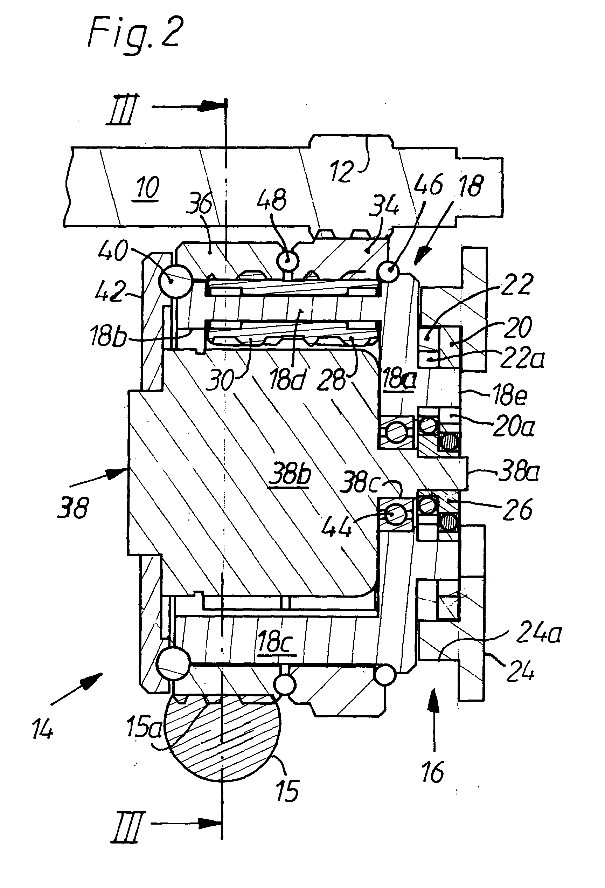

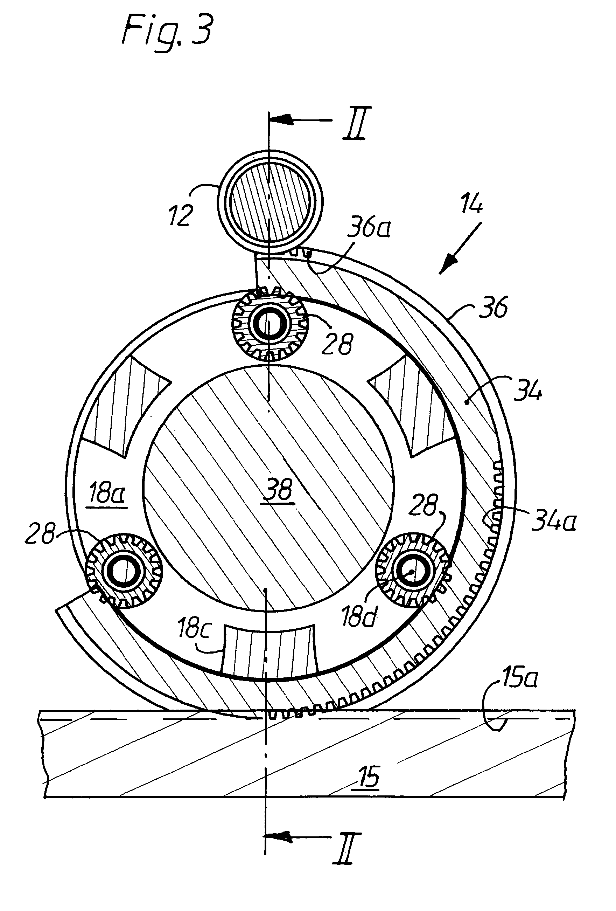

Ferner sind im Planetenradträger 18 jeweils zwischen den Stegen 18c koaxial hintereinander angeordnete und fest miteinander verbundene Planetenräder 28, 30 auf festen Achsen 18d (vgl. **Fig. 2 und 3**) drehbar gelagert.

Die schräg verzahnten Planetenräder 28, 30 kämmen mit innenverzahnten, ringförmigen Außenrädern 34, 36, die mit ihrer Außenverzahnung 34a, 36a (vgl. **Fig. 3**) mit dem Zahnritzel 12 der Lenksäule 10 und der Verzahnung 15a auf der Zahnstange 15 des Lenkgetriebes in Eingriff sind. Die Zähnezahlen der Innenverzahnungen der Außenräder 34, 36 sind unterschiedlich, so dass auch das jeweilige Übersetzungsverhältnis Planetenrad 28 : Außenrad 34 unterschiedlich zum Übersetzungsverhältnis Planetenrad 30 : Außenrad 36 ist.

Innerhalb des Planetenradträgers 18 bzw. innerhalb der Stege 18c und der Planetenräder 28, 30 ist konzentrisch dazu ein Elektromotor 38 (nicht im Detail gezeichnet) angeordnet, auf dessen Antriebswelle 38a der Excenter 26 befestigt ist.

Der Planetenradträger 18 ist mittels eines ersten, kreisförmigen Führungsringes 40 an einem mit dem Gehäuse 38b des Elektromotors 38 und mit dem nicht dargestellten Gehäuse des Zahnstangen-Lenkgetriebes fest verbundenen Gehäuseflansch 42 in komplementären halbkreisförmigen Nuten drehbar geführt (vgl. **Fig. 2**). Ferner ist der Planetenradträger 18 bzw. dessen Scheibe 18a an der entgegengesetzten Stirnseite des Elektromotors 38 an einem Gehäusevorsprung 38c über ein Kugellager 44 drehbar gelagert.

Die Außenräder 34, 36 sind des weiteren über den ersten Führungsring 40 und einen zweiten Führungsring 46 an den Scheiben 18b und 18a wie ersichtlich verdrehbar geführt, wobei die Führungsringe 40, 46 wiederum in entsprechenden Nuten aufgenommen sind. Ein weiterer Führungsring 48 schließlich ist zwischen den beiden Außenringen 34, 36 in komplementären, halbkreisförmigen Nuten eingefügt. Es versteht sich, dass die besagten Nuten jeweils ringförmig und konzentrisch zur Lagerung des Planetenradträgers 18 über das Kugellager 44 hergestellt sind. Anstelle der Führungsringe 40, 46, 48 könnten auch Wälzlager verwendet sein.

Der Planetenradträger 18 und die Statorscheibe 24 weisen Mitnehmer 18e bzw. 24a auf, die im Zusammenwirken mit den Kurvenscheiben 20, 22 bzw. deren wellenförmiger Außenkontur in an sich bekannter Weise eine Drehung des Planetenradträgers 18 relativ zur Statorscheibe 24 dann bewirken, wenn der Excenter 26 von dem Elektromotor 38 angetrieben eine gegenläufig taumelförmige Bewegung der Kurvenscheiben 20, 22 steuert. Die Drehrichtung des Planetenradträgers 18 kann dabei je nach Drehrichtung des Excenters 26 umgesteuert werden. Wie ersichtlich ist, ragen dabei die Mitnehmer 18e des Planetenradträgers 18 in entsprechende Ausnehmungen 20a, 22a der Kurvenscheiben 20, 22 ein. Ferner sind die Kurvenscheiben 20, 22 auf dem Excenter 26 über Wälzlager (ohne Bezugszeichen) drehbar gelagert.

In nicht dargestellter Weise sind der Gehäuseflansch 42 und die Statorscheibe 24 mit dem Gehäuse des Zahnstangen-Lenkgetriebes fest verbunden, und zwar derart, dass ein spielfreier Zahneingriff zwischen dem Außenrad 36 und der Verzahnung 15a der Zahnstange 15 sichergestellt ist. Dabei kann die Zahnstange 15 in üblicher Weise durch ein federnd vorgespanntes Druckstück im Gehäuse des Lenkgetriebes entsprechend gegen die Außenverzahnung 36a des korrespondierenden Außenrades 36 vorgespannt sein.

Des weiteren ist zusätzlich die Außenverzahnung 34a des Außenrades 34 mit einer verschleißfesten Kunststoffbeschichtung (nicht ersichtlich) mit geringer maßlicher Überdeckung versehen, um auch zwischen dem Zahnritzel 12 der Lenksäule 10 und dem Außenrad 34 eine Spielfreiheit herzustellen.

Ferner kann in nicht dargestellter Weise die Verzahnung 34a zumindest des antreibenden Außenrades 34 und des Zahnritzels 12 der Lenksäule 10 durch eine Kegelverzahnung gebildet sein, so dass die Drehachse der Lenksäule 10 in einem Winkel zur Drehachse des Überlagerungsgetriebes 14 ausgerichtet sein kann.

Sollte aus konstruktiven Gründen eine Drehrichtungsumkehr des angetriebenen Außenrades 34 relativ zum die Zahnstange 15 antreibenden Außenrad 36 des Überlagerungsgetriebes 14 erforderlich sein, so können im Planetenradträger 18 über weitere Achsen Umkehr-Planetenräder (nicht dargestellt) vorgesehen sein, die mit den Planetenrädern 28 oder 30 und mit dem korrespondierenden Außenrad 34 oder 36 kämmen.

Bei einer Lenkbewegung eingeleitet über die Lenksäule 10 wird mittels des Zahnritzels 12 das Außenrad 34 verdreht, welches über die Planetenräder 28, 30 bei feststehendem Planetenradträger 18 das Außenrad 36 in gleicher Drehrichtung verdreht, wodurch die Zahnstange 15 entsprechend dem gewählten Übersetzungsverhältnis verschoben wird. Durch Ansteuerung des Elektromotors 38 kann zudem über das Stellgetriebe bzw. Kurvenscheibengetriebe 16 der Planetenradträger 18 in beiden Drehrichtungen relativ zum antreibenden Außenrad 34 verdreht und damit eine positive oder negative Überlagerung der Lenkbewegung gesteuert werden.

Die Erfindung ist nicht auf das dargestellte Ausführungsbeispiel beschränkt. So könnte anstelle des Kurvenscheibengetriebes 16 auch ein anderes Stellgetriebe mit verdrehbarem Planetenradträger 18 vorgesehen sein, z. B. ein einfaches Planetenradgetriebe mit einem außenverzahnten Sonnenrad auf der Welle 38a des Elektromotors 38, einem innenverzahnten Statorring und dazwischen befindlichen, weiteren Planetenrädern.

## Patentansprüche

1. Lenkvorrichtung für Kraftfahrzeuge, mit einem Zahnstangen-Lenkgetriebe, dessen Zahnstange mit einem Antriebsritzel in Eingriff ist, wobei das Antriebsritzel unter Zwischenschaltung eines Überlagerungsgetriebes mit der Lenksäule des Kraftfahrzeuges gekoppelt ist und wobei das Überlagerungsgetriebe durch ein Stellgetriebe gebildet ist, dessen eines Getriebeelement mittels eines Elektromotors zur Überlagerung einer Lenkbewegung verstellbar ist, **dadurch gekennzeichnet, dass**
- das Getriebeelement ein Planetenradträger des Stellgetriebes ist;
- der Planetenradträger durch zwei ringförmige und über Stege miteinander verbundene Scheiben gebildet ist, zwischen denen jeweils zwei miteinander verbundene Planetenräder frei drehbar gelagert sind;
- die Planetenräder mit zwei innen verzahnten, ringförmigen Außenrädern kämmen;
- das eine Außenrad mit einer Außenverzahnung das mit der Zahnstange in Eingriff befindliche Antriebsritzel bildet;
- das zweite Außenrad mit einer Außenverzahnung mit einem weiteren Zahnritzel auf der Lenksäule in Eingriff ist; und
- der Elektromotor im wesentlichen konzentrisch innerhalb des Planetenradträgers und der jeweils zwei Planetenräder angeordnet ist.

2. Lenkvorrichtung nach Anspruch 1, **dadurch gekennzeichnet, dass** die Planetenräder zu den korrespondierenden Außenrädern unterschiedliche Übersetzungsverhältnisse aufweisen.

3. Lenkvorrichtung nach den Ansprüchen 1 oder 2, **dadurch gekennzeichnet, dass** die an- und abtreibenden Außenräder über in komplementären Nuten angeordnete Führungsringe verdrehbar auf den Scheiben des Planetenradträgers geführt sind.

4. Lenkvorrichtung nach einem oder mehreren der vorhergehenden Ansprüche, **dadurch gekennzeichnet, dass** die an- und abtreibenden Außenringe zwischen sich über einen in komplementären Nuten angeordneten Führungsring gegeneinander verdrehbar gelagert sind.

5. Lenkvorrichtung nach einem oder mehreren der vorhergehenden Ansprüche, **dadurch gekennzeichnet, dass** die von dem Stellgetriebe abgewandte Scheibe des Planetenradträgers auf einem den Elektromotor tragenden Gehäuseflansch des Überlagerungsgetriebes drehbar gelagert ist.

6. Lenkvorrichtung nach einem oder mehreren der vorhergehenden Ansprüche, **dadurch gekennzeichnet, dass** der Elektromotor über einen Excenter mehrere Kurvenscheiben eines Kurvenscheibengetriebes als Stellgetriebe antreibt, die trieblich mit Mitnehmerbolzen am Planetenradträger und Statorbolzen an einer gehäusefesten Statorscheibe zusammenwirken.

7. Lenkvorrichtung nach einem oder mehreren der vorhergehenden Ansprüche, **dadurch gekennzeichnet, dass** die dem Stellgetriebe unmittelbar benachbarte Scheibe des Planetenradträgers auf dem Gehäuse des Elektromotors drehbar gelagert ist.

8. Lenkvorrichtung nach einem oder mehreren der vorhergehenden Ansprüche, **dadurch gekennzeichnet, dass** die Außenverzahnung des antreibenden Außenrades und/oder des abtreibenden Außenrades eine begrenzt nachgiebige Kunststoffbeschichtung aufweist.

9. Lenkvorrichtung nach einem oder mehreren der vorhergehenden Ansprüche, **dadurch gekennzeichnet, dass** die Verzahnung zumindest des antreibenden Außenrades und des Zahnritzels der Lenksäule durch eine Kegelverzahnung gebildet ist.

10. Lenkvorrichtung nach einem oder mehreren der vorhergehenden Ansprüche, **dadurch gekennzeichnet, dass** das an- oder abtreibende Außenrad über ein Umkehr-Planetenrad mit den weiteren Planetenrädern trieblich verbunden ist.
